# EUROPEAN PATENT APPLICATION

(11) **EP 3 913 729 A1**
(43) Date of publication of application: **24.11.2021**
(21) Application number: 20866919.2
(22) Date of filing: 24.03.2020
(51) Int. Cl.: H01M 10/613, H01M 10/6569, H01M 10/659, F28F 3/12, F28D 20/02, H01M 10/6555, H01M 10/6557

(54) **HEAT DISSIPATION MODULE AND BATTERY MODULE**

(71) Applicant: DONGGUAN POWERAMP TECHNOLOGY LIMITED, Dongguan, Guangdong 523000 (CN)
(72) Inventor: HU, Chuanpeng, Dongguan Guangdong 523000 (CN); LI, Changjiang, Dongguan Guangdong 523000 (CN); LAN, Tianbao, Dongguan Guangdong 523000 (CN); HU, Lianya, Dongguan Guangdong 523000 (CN)
(74) Representative: Klunker IP Patentanwälte PartG mbB
(86) International application number: PCT/CN2020/080882
(87) International publication number: WO 2021/189250

(57) **Abstract**

Embodiments of this application relate to the field of battery technologies, and disclose a heat dissipation module and a battery module. The heat dissipation module is applied to the battery module, and includes: a separator, where an accommodating space is provided inside the separator, a communication groove is provided on a side of the separator, and the communication groove communicates with the accommodating space; a thermally conductive material, filled in the accommodating space, where the thermally conductive material is configured to absorb heat generated in the battery module and dissipate the heat out of the separator through the communication groove; and a first barrier, configured to be disposed between a battery cell of the battery module and the separator, wherein the first barrier is configured to stop the passage of the thermally conductive material. The heat dissipation module absorbs the heat generated in the battery module through the thermally conductive material, and the heat dissipation module includes only the separator, the thermally conductive material, and the first barrier, not requiring a cooling pipe and other power apparatuses. Therefore, the heat dissipation module has a relatively simple structure.

## Description

### TECHNICAL FIELD

Embodiments of this application relate to the field of battery technologies, and in particular, to a heat dissipation module and a battery module.

### BACKGROUND

An energy storage apparatus is an apparatus that converts external energy into electric energy and stores the electric energy in the apparatus to supply power to an external device when needed. Generally, the energy storage apparatus includes a battery module, an inverter, and a controller. As a core component, the battery module usually includes a plurality of battery cells arranged adjacently and connected in series or in parallel, and the plurality of battery cells cooperate with each other to implement high-power output. The plurality of battery cells produce huge heat when working simultaneously. If the heat is not dissipated in a timely manner, thermal runaway may occur in the battery module, or even safety accidents such as explosion of the battery module and the energy storage apparatus may be caused.

In order to overcome such a disadvantage, some manufacturers currently install a cooling component between two adjacent battery cells. Usually, the cooling component includes a cooling pipe, a coolant, and a power apparatus. The coolant is filled in the cooling pipe. The power apparatus is connected to the cooling pipe and is configured to drive the coolant to circulate in the cooling pipe. The cooling component dissipates the heat generated by the battery cell to the outside through the flow of the coolant, so as to control a temperature of the battery cell within a reasonable range.

During implementation of this application, the inventor of this application finds that the cooling component currently used in the battery module includes the cooling pipe and the power apparatus, and has a complex structure; therefore, the battery module including the cooling component also has an overall relatively complex structure.

### SUMMARY

Embodiments of this application aim to provide a heat dissipation module and a battery module, so as to resolve the technical problem that a cooling assembly currently applied to a battery module has a complex structure.

The embodiments of this application use the following technical solutions to resolve the technical problem:

A heat dissipation module is provided and applied to a battery module. The heat dissipation module includes a separator, a thermally conductive material, and a first barrier. An accommodating space is provided inside the separator, a communication groove is provided on a side of the separator, and the communication groove communicates with the accommodating space. The thermally conductive material is filled in the accommodating space, and the thermally conductive material is configured to absorb heat generated in the battery module and dissipate the heat out of the separator through the communication groove. The first barrier is configured to be disposed between a battery cell of the battery module and the separator, and the first barrier is configured to prevent the passage of the thermally conductive material.

In a further improvement solution of the foregoing technical solution, the thermally conductive material fills 60% to 90% of a total volume of the accommodating space and the communication groove at a room temperature.

In a further improvement solution of the foregoing technical solution, the accommodating space is in a continuously bending shape.

In a further improvement solution of the foregoing technical solution, the first barrier is provided with a microporous structure for gas generated in the battery module to pass through.

In a further improvement solution of the foregoing technical solution, the separator has a gas-permeable structure.

In a further improvement solution of the foregoing technical solution, the separator has an air-impermeable structure, the separator is provided with a heat-conducting end face at one end close to the first barrier, and the heat-conducting end face is provided with an air groove.

In a further improvement solution of the foregoing technical solution, at least one end of the air groove extends to the side of the separator.

In a further improvement solution of the foregoing technical solution, in a plane parallel to the heat-conducting end face, a projection of the accommodating space in a direction perpendicular to the heat-conducting end face is staggered with a projection of the air groove.

In a further improvement solution of the foregoing technical solution, a second barrier is further included, where the second barrier covers and seals an opening of the communication groove, and the second barrier is configured to prevent the thermally conductive material from seeping out of the separator.

In a further improvement solution of the foregoing technical solution, at least one end of the air groove extends to the side of the separator provided with the communication groove.

The heat dissipation module further includes a second barrier, where the second barrier covers and seals an opening of the communication groove and an opening at one end of the air groove corresponding to the communication groove.

The second barrier is configured to prevent the thermally conductive material from seeping out of the separator, and the second barrier is provided with a microporous structure for gas generated by the battery cell to pass through.

In a further improvement solution of the foregoing technical solution, the first barrier is made of polytetrafluoroethylene; and/or
the second barrier is made of polytetrafluoroethylene.

In a further improvement solution of the foregoing technical solution, the thermally conductive material is a phase-change material.

The embodiments of this application further use the following technical solutions to resolve the technical problem:

A battery module is provided, including a housing assembly and a battery cell, where the housing assembly is provided with an accommodating cavity, and the battery cell is received in the accommodating cavity. The battery module further includes a heat dissipation module disposed between the battery cells and/or between the battery cell and the housing assembly. The heat dissipation module includes:
a separator, connected to the housing assembly, where the separator is provided with an accommodating space, the separator is provided with a communication groove on a side corresponding to an inner wall of the housing assembly, and the communication groove communicates with the accommodating space;
a thermally conductive material, filled in the accommodating space, where the thermally conductive material is configured to absorb heat generated in the battery cell and dissipate the heat to the outside through the communication groove and the housing assembly; and
a first barrier, disposed between the battery cell and the separator, where the first barrier is configured to prevent the passage of the thermally conductive material.

In a further improvement solution of the foregoing technical solution, a volume of the thermally conductive material is 60% to 90% of a total volume of the accommodating space and the communication groove at a room temperature.

In a further improvement solution of the foregoing technical solution, the accommodating space is in a continuously bending shape.

In a further improvement solution of the foregoing technical solution, the first barrier is provided with a microporous structure for gas generated in the battery cell to pass through.

In a further improvement solution of the foregoing technical solution, the separator has a gas-permeable structure.

In a further improvement solution of the foregoing technical solution, the separator has an air-impermeable structure, the separator is provided with a heat-conducting end face at one end close to the first barrier, and the heat-conducting end face is provided with an air groove.

In a further improvement solution of the foregoing technical solution, at least one end of the air groove extends to the side of the separator.

In a further improvement solution of the foregoing technical solution, the heat dissipation module further includes a second barrier, where the second barrier covers and seals an opening of the communication groove, and the second barrier is configured to prevent the thermally conductive material from seeping out of the separator.

In a further improvement solution of the foregoing technical solution, at least one end of the air groove extends to the side of the separator provided with the communication groove;
the heat dissipation module further includes a second barrier, where the second barrier covers and seals an opening of the communication groove, and covers and seals an opening at one end of the air groove corresponding to the communication groove; and
the second barrier is configured to prevent the thermally conductive material from seeping out of the separator, and the second barrier is provided with a microporous structure for gas generated by the battery cell to pass through.

In a further improvement solution of the foregoing technical solution, the housing assembly includes a housing and a buffer sheet, the battery cell is received in the housing, the buffer sheet is at least partially embedded between the second barrier and the housing, and the housing and the buffer sheet jointly form the accommodating cavity.

In a further improvement solution of the foregoing technical solution, the accommodating space and the communication groove extend along the same straight line and are formed integrally, and both the accommodating space and the communication groove extend obliquely with respect to a bottom of the housing assembly.

The beneficial effects of this application are as follows:

The heat dissipation module provided in the embodiments of this application is applied to the battery module, and the heat dissipation module includes the separator, the first barrier, and the thermally conductive material. The separator is provided with the accommodating space for accommodating the thermally conductive material, and the side of the separator is further provided with the communication groove that communicates with the accommodating space. The thermally conductive material is configured to absorb heat generated by external heat generating components and dissipate the heat to the outside through the communication groove.

Compared with an existing battery module with a cooling component on the market, the heat dissipation module provided in the embodiments of this application absorbs the heat generated by the heat generating components through the thermally conductive material, and the heat dissipation module includes only the separator, the thermally conductive material, and the first barrier, not requiring a cooling pipe and other power apparatuses. Therefore, the heat dissipation module has a relatively simple structure, and the battery module with the heat dissipation module also has a relatively simple structure. In addition, the first barrier can avoid a disadvantage that the thermally conductive material accidentally seeping from the accommodating space flows to a surface of the battery cell and affects normal operation of the battery cell.

### BRIEF DESCRIPTION OF DRAWINGS

One or more embodiments are described by using examples with reference to the corresponding accompanying drawings. The example descriptions do not constitute any limitation on the embodiments. Components with the same reference signs in the drawings are denoted as similar components. Unless otherwise specified, figures in the accompanying drawings do not constitute any limitation on the proportion.
FIG. 1 is a schematic exploded view of a battery module according to an embodiment of this application;
FIG. 2 is a three-dimensional schematic diagram of a separator in FIG. 1;
FIG. 3 is a partially enlarged view of position A in FIG. 2;
FIG. 4 is a three-dimensional schematic diagram of another embodiment of the separator in FIG. 1;
FIG. 5 is a partially enlarged view of position B in FIG. 4;
FIG. 6 is a schematic exploded view of a battery cell, a second barrier, and a buffer member in FIG. 1;
FIG. 7 is a three-dimensional schematic cross-sectional view of a battery module according to another embodiment of this application; and
FIG. 8 is a schematic cross-sectional view of a separator in FIG. 7.

### DESCRIPTION OF EMBODIMENTS

To facilitate understanding of this application, this application is described in more detail below with reference to the accompanying drawings and specific embodiments. It should be noted that when a component is described as being "fixed", "fastened", or "installed" on another component, the component may be placed on the another component directly, or one or more intermediate components may exist in between. When one component is described as being "connected to" another component, the component may be directly connected to the another component, or one or more intermediate components may exist in between. The terms "vertical", "horizontal", "left", "right", "inner", "outer", and similar expressions used in this specification are for illustrative purposes only.

Unless otherwise defined, all technical and scientific terms used in this specification have the same meanings as commonly understood by those skilled in the technical field of this application. The terms used in the specification of this application are merely for the purpose of describing specific embodiments, and are not intended to limit this application. The term "and/or" used in this specification includes any one or a combination of one or more related listed items.

In addition, technical features included in different embodiments of this application described below can be combined under the premise of no conflict with each other.

In this specification, "installing" includes fastening or restricting a component or apparatus to a specific position or place in a manner of welding, screwing, clamping, bonding, or the like, and the component or apparatus may be kept still in a specific position or place or may be moved within a limited range, and the component or apparatus can be disassembled or not disassembled after being fixed or restricted to a specific position or place, which is not limited in the embodiments of this application.

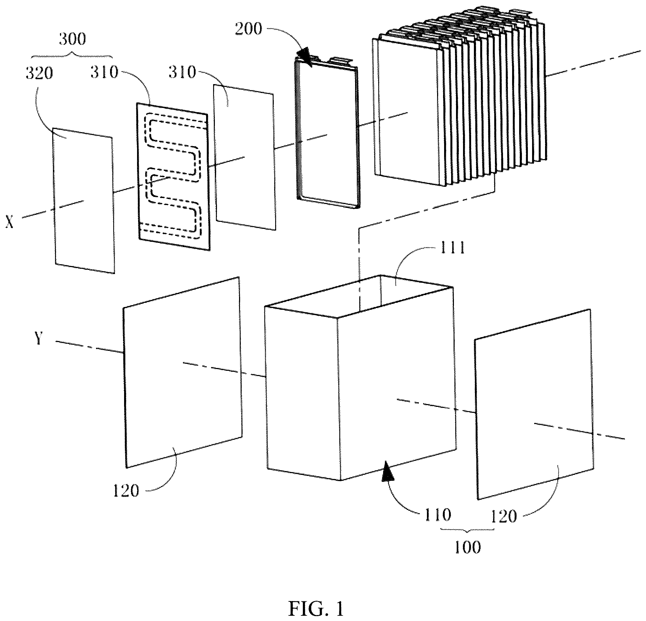

Referring to FIG. 1, FIG. 1 is a schematic exploded view of a battery module according to an embodiment of this application. The battery module includes a housing assembly 100, a plurality of battery cells 200, and a heat dissipation module 300. The housing assembly 100 is provided with an accommodating cavity 111, and the battery cell 200 is received in the accommodating cavity 111. The heat dissipation module 300 is also received in the accommodating cavity 111, and the heat dissipation module 300 is disposed between the battery cells 200 and/or between the battery cell 200 and the housing assembly 100. The heat dissipation module 300 includes a separator 310, a thermally conductive material (not shown in the figure), and a first barrier 320. The separator 310 is connected to the housing assembly 100 and is provided with an accommodating space inside. The separator 310 is provided with at least one communication groove on a side corresponding to an inner wall of the housing assembly 100, and the communication groove communicates with the accommodating space. The thermally conductive material is filled in the accommodating space, and is used to absorb the heat generated by the battery cell 200 in the battery module, and dissipate the heat to the outside through the communication groove and the housing assembly 100. The first barrier 320 is disposed between the battery cell 200 and the separator 310, and the first barrier 320 is configured to reduce the passage of the thermally conductive material.

Referring to FIG. 1, the housing assembly 100 includes a housing 110. The entire housing 110 is in a rectangular shape, and includes a bottom wall, a side wall extending from an edge of the bottom wall, and a top wall (not shown) provided at one end of the side wall away from the bottom wall. The bottom wall, the side wall, and the top wall enclose the accommodating cavity 111.

Further referring to FIG. 1, the entire battery cell 200 is in an upright flat rectangular shape and is received in the accommodating cavity 111. In this embodiment, there are at least two battery cells 200, and the at least two battery cells 200 are stacked along a first direction X.

For the heat dissipation module 300, referring to FIG. 1, there are a plurality of heat dissipation modules 300. The plurality of heat dissipation modules 300 are separately arranged between two adjacent battery cells 200, and/or arranged along the first direction X between an end of an outermost battery cell 200 away from other battery cells 200 and the inner wall of the housing assembly 100. Each heat dissipation module 300 is in close contact with the battery cell 200 to better absorb the heat generated by the battery cell 200. In addition, each heat dissipation module 300 is correspondingly connected to at least one inner wall of the housing assembly 100 to pass and dissipate the absorbed heat to the outside through the housing assembly 100. The heat dissipation module 300 includes the separator 310, the thermally conductive material, and the first barrier 320. Certainly, in other embodiments of this application, there may also be a gap between the heat dissipation module 300 and the battery cell 200, and the heat dissipation module 300 receives heat radiated by the battery cell 200 to dissipate heat for the battery cell 200.

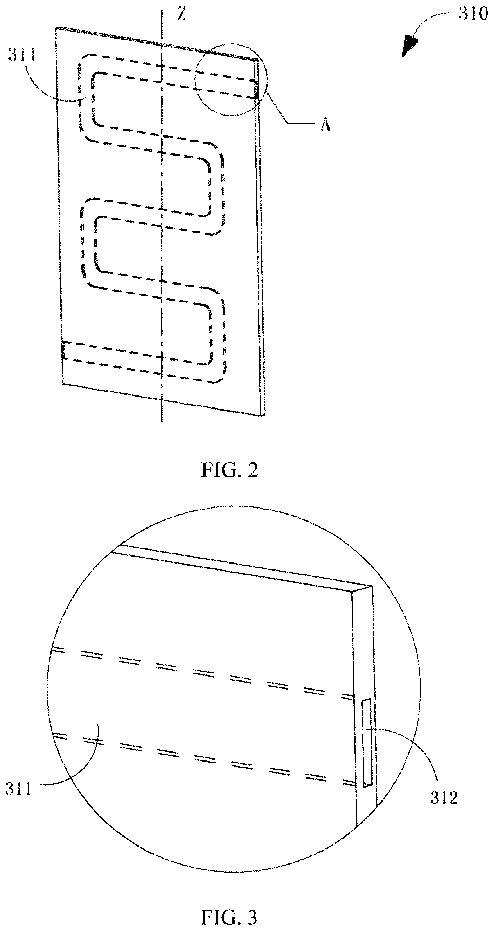

For the foregoing separator 310, FIG. 2 and FIG. 3 are respectively a schematic three-dimensional view of the separator 310 and a partially enlarged view at position A. Also referring to FIG. 1, the entire separator 310 has a flat sheet-like structure, and is provided with an accommodating space 311 (denoted by dashed lines in FIG. 2) for filling the thermally conductive material. The separator 310 is provided with a communication groove 312 on the side corresponding to the side wall of the housing assembly 100. One end of the communication groove 312 communicates with the accommodating space 311, and an opening at the other end is completely covered by the inner wall of the housing assembly 100. In this embodiment, the accommodating space 311 is in a continuously bending S-shape extending along a vertical direction shown in FIG. 2. One communication groove 312 communicates with the top of the accommodating space 311, and the other communication groove 312 communicates with the bottom of the accommodating space 311. The two communication grooves 312 are respectively provided on two opposite sides of the separator 310 along a second direction Y, and the second direction Y and the first direction X are perpendicular to each other. The S-shaped design of the accommodating space 311 can effectively guide the thermally conductive material to the communication groove 312. It should be noted that this application does not specifically limit the shape of the accommodating space 311. For example, in some other embodiments of this application, the accommodating space may alternatively be in a continuously bending Z shape, an O shape or a Y shape, a hollow square shape, an "H" shape, or other shapes, which are not described one by one herein. Optionally, the separator 310 is made of an elastic thermally conductive material. On the one hand, the separator 310 features elasticity, and can absorb swelling of the battery cell 200 during thermal expansion of the battery cell 200 that comes in contact with the separator 310, so as to avoid damage of the battery cell 200 resulting from excessive internal pressure; on the other hand, the separator 310 features heat conductivity, and can also absorb the heat generated by the battery cell 200 coming in contact with the separator 310, and dissipate the heat to the outside through the housing assembly 100 connected to the separator 310, so as to further improve the heat dissipation effect of the heat dissipation module 300 for the battery cell 200.

The thermally conductive material is filled in the accommodating space 311, and is used to absorb heat generated by the corresponding battery cell 200 during the heating process of the battery cell 200 to decrease the temperature of the battery cell 200, and dissipate the heat to the outside through the communication groove 312 and the housing assembly 100, so as to proceed with the heat absorbing process of the thermally conductive material. Considering that a phase-change material has excellent heat storage performance, the thermally conductive material is preferably a phase-change material. The phase-change material may be solid or liquid before the phase change. Further, considering that a volume of the phase-change material during the phase change process from solid to liquid is slightly changed and does not cause a sharply increasing pressure inside the accommodating space, the thermally conductive material is further preferably a solid phase-change material at a room temperature. For example, in some embodiments of this application, the thermally conductive material includes an organic phase-change energy storage material, namely modified paraffin, and the modified paraffin includes paraffin and graphite. A mass percentage of the paraffin is 50% to 70% of that of the modified paraffin. During the heating process of the battery cell 200, before a temperature of the modified paraffin exceeds a phase change temperature, the modified paraffin has been using its latent heat to cool the battery cell. For another example, in some other embodiments of this application, the thermally conductive material includes at least one of inorganic phase-change energy storage materials: CaCl₂•6H₂O, NaSO₄•10H₂O, and C₂H₃NaO₂•3H₂O. During the heating process of the battery cell 200, before a temperature of the thermally conductive material exceeds a phase change temperature, the thermally conductive material has been using its latent heat to cool the battery cell 200. It can be understood that the thermally conductive material may alternatively be other organic phase-change energy storage materials or inorganic salt phase-change energy storage materials, which is not limited herein. It should also be understood that even though the thermally conductive material being a phase-change material is used for description in this embodiment, in other embodiments of this application, the thermally conductive material may alternatively be any other materials capable of implementing thermal conductivity, such as thermally conductive silicone grease.

For the first barrier 320, referring to FIG. 1, the first barrier 320 is provided between the separator 310 and a corresponding battery cell 200, and is configured to prevent the passage of the thermally conductive material, so as to prevent the thermally conductive material from accidentally seeping out of the accommodating space and prevent the thermally conductive material from coming in direct contact with the battery cell 200 to affect normal use of the battery cell 200. In this embodiment, the separator 310 is provided with a heat-conducting end face at one end facing towards the battery cell 200. The separator 310 is also provided with a heat-conducting end face at one end facing away from the battery cell 200, and the first barrier 320 is fastened to the heat-conducting end face. Each separator 310 corresponds to two first barriers 320, that is, the separator 310 is provided with the heat-conducting end face at one end close to the first barrier 320. It can be understood that the separator 310 may be also in one-to-one correspondence with the first barrier 320. In addition, in other embodiments of this application, the first barrier 320 may alternatively be fastened to an end face of the battery cell close to the separator, and each battery cell corresponds to two first barriers 320; likewise, the battery cell 200 may be also in one-to-one correspondence with the first barrier 320.

Further, to avoid a disadvantage that because the first barrier 320 is in close contact with the battery cell 200, the gas generated during the charging and discharging process of the battery cell 200 is blocked by the first barrier 320 and cannot be discharged to further cause excessive swelling of the battery cell 200, the first barrier 320 is provided with a microporous structure for the gas generated by the battery cell 200 to pass through. In this embodiment, the first barrier 320 is a waterproof and gas-permeable membrane made of polytetrafluoroethylene. The waterproof and gas-permeable membrane has a microporous structure with a pore diameter of less than 2 nm, to facilitate the passage of the gas generated by the battery cell 200. In addition, the first barrier 320 made of polytetrafluoroethylene also has the advantages of good waterproof performance, good air permeability, low friction coefficient, and a wide range of operating temperatures (-40°C to 150°C). It can be understood that the first barrier 320 is not limited to the waterproof and gas-permeable membrane made of polytetrafluoroethylene. In other embodiments of this application, adaptive adjustment can be made based on a type of thermally conductive material, provided that the passage of the thermally conductive material can be prevented and the passage of the gas generated by the battery cell 200 is allowed. For example, in some embodiments, the first barrier 320 is a unidirectional gas-permeable membrane, and is configured to allow only the passage of the gas along a direction from an adjacent battery cell to the adjacent separator, and at the same time, not to allow the passage of the thermally conductive material.

In some embodiments, to ensure that the gas passing through the first barrier 320 can escape smoothly, the separator 310 is made of a gas-permeable material, such as foam, so that the gas generated by the battery cell 200 can pass through the first barrier 320 and the separator 310 successively, and escape to the accommodating cavity 111 or escape to the outside through the gap of the housing assembly 100. It should be noted that because the separator 310 is made of a gas-permeable material, the accommodating space 311 inside the separator 310 should be treated with an anti-permeation process to prevent the thermally conductive material from seeping out of the separator.

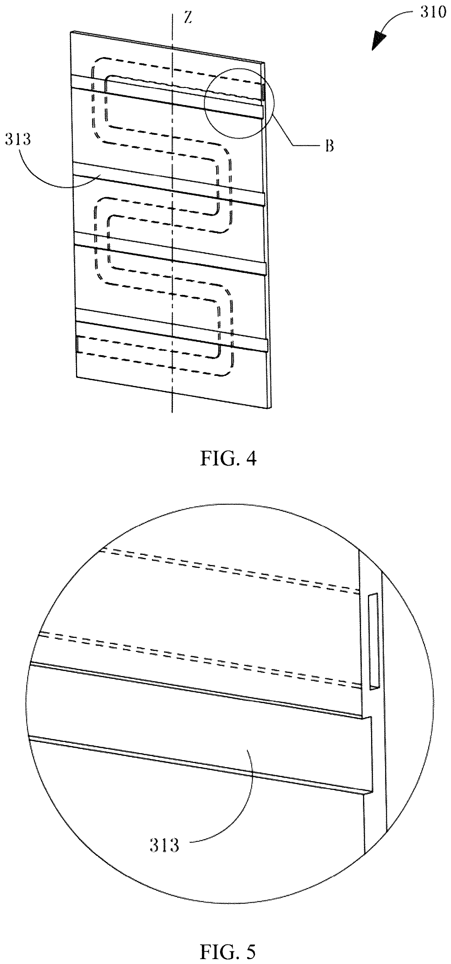

In some embodiments, the separator 310 is made of a gas-impermeable material, such as thermally conductive rubber. To ensure that the gas passing through the first barrier 320 can escape smoothly, the heat-conducting end face of the separator 310 is provided with an air groove. Specifically, FIG. 4 and FIG. 5 are respectively a schematic three-dimensional view of an embodiment of the separator 310 and a partially enlarged view at position B. Also referring to FIG. 1 to FIG. 3, the heat-conducting end face of the separator 310 is provided with an air groove 313. The air groove 313 is a straight line extending along a second direction Y shown in the figure, so that gas generated by the battery cell 200 can pass through the first barrier 320 and enter the air groove 313, thereby avoiding excessive swelling of the battery cell 200. Further, to prevent a large amount of gas generated by the battery cell 200 from filling the air groove 313 to cause an obviously increasing air pressure in the air groove 313 to affect the fixing effect of the first barrier 320 and even damage the first barrier 320, at least one end of the air groove 313 extends to the side of the separator 310, so that gas entering the air groove 313 can escape to the accommodating cavity through the opening of the air groove 313 on the side of the separator 310, or further pass through the gap of the housing assembly 100 to escape to the outside. In this embodiment, one end of the air groove 313 extends to the side of the separator 310 provided with the communication groove, and the other end of the air groove 313 extends to the other side of the separator 310 provided with another communication groove. It should be understood that even though the air groove in this embodiment is in a linear shape, which is not limited in this application, and the air groove may alternatively be in any other shapes, provided that the air groove is provided on the heat-conducting end face. For example, in some embodiments of this application, the air groove 313 is in a continuously bending S-shape extending along a height direction Z of the separator, and at least one end extends to the side of the separator 310 provided with the communication groove. For another example, in some embodiments, the air groove 313 is in a Y-shape, and the three ends respectively extend to the side of the separator 310 close to the bottom wall of the housing, and two opposite sides of the separator in the second direction Y. Optionally, regardless of the shape of the air groove 313, in a plane parallel to the heat-conducting end face, a projection of the accommodating space 311 in a direction perpendicular to the heat-conducting end face is staggered with a projection of the air groove, to ensure that the accommodating space 311 has a volume as large as possible and the accommodating space can be filled with more thermally conductive materials.

It should be understood that in this embodiment, there are at least two battery cells 200, and this application is not limited thereto. In other embodiments of this application, there may alternatively be one battery cell. Correspondingly, the heat dissipation module 300 is disposed between the battery cell and the inner wall of the housing assembly.

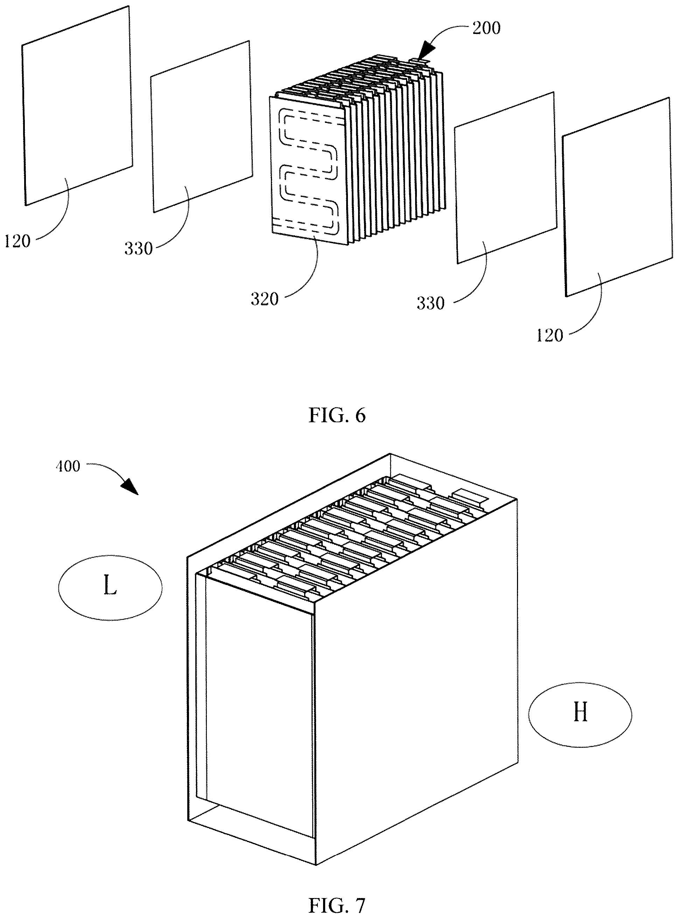

In some embodiments of this application, the heat dissipation module 300 further includes a second barrier provided at an opening of a communication groove 312. FIG. 6 is a schematic exploded view of the second barrier 330, the battery cell 200, and the buffer sheet 120. Also with reference to FIG. 1 to FIG. 5, in this embodiment, there are two second barriers 330, and the two second barriers 330 are respectively disposed on both sides of each separator 310 along a second direction Y perpendicular to the first direction X. Each second barrier 330 covers and seals the opening of the communication groove 312 on a single side of the separator 310, and the second barrier 330 is configured to prevent the thermally conductive material in a fluid state from seeping out of the separator 310 through the opening of the communication groove 312. It should be noted that "sealing" mentioned in this application means: preventing fluid or solid particles from leaking out of an adjacent joint of two components.

Further, when the separator 310 has a structure made of an gas-impermeable material shown in FIG. 4, to ensure the fixing effect of the second barrier 330, the second barrier 330 has a size basically the same as that of the separator 310 along a height direction Z of the separator 310, and basically covers the side of the separator 310. In this case, the second barrier 330 also seals the communication groove 312 and the opening of the air groove 313 at one end corresponding to the communication groove. In order to facilitate the escape of the gas generated by the battery cell 200 out of the separator 310 to avoid excessive air pressure inside the air groove 313, the second barrier 330 uses a waterproof and gas-impermeable membrane with performance similar to that of the first barrier 320. That is, the second barrier 330 is used to prevent the thermally conductive material from seeping out of the separator 310 from the opening of the communication groove 312. In addition, the second barrier 330 is provided with a microporous structure, so that the gas generated by the battery cell 200 passes through the opening of the air groove 313. In this embodiment, the second barrier 330 is made of polytetrafluoroethylene.

It should be understood that even in this embodiment, one second barrier 330 corresponds to communication grooves of a plurality of separators 310, and this application is not limited thereto. In other embodiments of this application, the second barrier may alternatively be in one-to-one correspondence with the communication groove. In addition, the communication groove may alternatively be provided on a side of the separator corresponding to the top wall of the housing. In this case, because a tab is disposed at one end of the battery cell close to the top wall of the housing, the second barrier is preferably in one-to-one correspondence with the communication groove. It should be noted that the foregoing configuration manner of the second barrier 330 is based on the thermally conductive material being a solid-liquid phase-change material, and the configuration manner of the second barrier 330 may vary with a type of the thermally conductive material. For example, when the thermally conductive material is a liquid-gas phase-change material, the second barrier 330 should be configured to prevent the gas escaping from the accommodating space 311. In this case, the second barrier 330 may have an air-impermeable structure. It should be understood that when the thermally conductive material is a liquid-gas phase-change material, the second barrier 330 may still be configured to allow the gas generated by the battery cell 200 to pass through, and the thermally conductive material may be transformed into gas to escape out of the accommodating space. In this case, the thermally conductive material is a consumable.

In some embodiments of this application, at a room temperature, a filling volume of the thermally conductive material is set to be 60% to 90% of a total volume of the accommodating space and the communication groove 312. At the room temperature, there is a margin in the accommodating space and the communication groove 312. On the one hand, such margin provides a swelling space for the welling of the thermally conductive material during the heating process, to effectively avoid rapid swelling of the thermally conductive material during the heat absorption process and to prevent damage of the separator 310 and leakage of the thermally conductive material due to excessive pressure in the accommodating space and the communication groove. It should be noted that the "room temperature" in this embodiment means a temperature range of 20°C to 30°C.

In some embodiments of this application, to prevent the second barrier 330 from being collided and damaged during vibration of the battery module, the housing assembly 100 further includes a buffer sheet 120. Referring to FIG. 6, also with reference to other accompany drawings, at least a part of the buffer sheet 120 corresponds to the second barrier 330 and is embedded between the second barrier 330 and the housing 110. The buffer sheet 120 is used to provide a buffer force for the second barrier 330 through elastic deformation during the vibration of the battery module, so as to avoid damage to the second barrier 330 or reduce the degree of damage to the second barrier 330. Likewise, in order to prevent the outermost first barrier 320 from being collided and damaged during the vibration of the battery module, at least a part of the buffer sheet corresponds to the outermost first barrier 320 and is embedded between the outermost first barrier 320 and the housing 110. The buffer sheet 120 and the housing 110 jointly form the accommodating cavity 111. In this embodiment, the buffer sheet 120 is a thermally conductive foam. On the one hand, the foam can provide the buffer force, and on the other hand, the foam can quickly guide the heat generated by the thermally conductive material and the separator 310 to the housing and then dissipate the heat to the outside. It can be understood that the buffer sheet 120 may alternatively be other sheet-like materials capable of implementing elastic deformation, such as rubber or silicone.

The battery module provided in this embodiment of this application includes the housing assembly 100, the battery cell 200, and the heat dissipation module 300. The battery cell 200 is received in the accommodating cavity 111 of the housing assembly 100, and the heat dissipation module 300 is disposed between two battery cells 200, and/or between the battery cell 200 and the housing assembly 100. The heat dissipation module 300 specifically includes the separator 310, the thermally conductive material, and the first barrier 320. The separator 310 is provided with an accommodating space 311 for filling the thermally conductive material, and is provided with at least one communication groove 312 on the side corresponding to the inner wall of the housing assembly 100. The communication groove 312 communicates with the accommodating space. The thermally conductive material is filled in the accommodating space, and is used to absorb the heat generated by the battery cell 200, and dissipate the heat to the outside through the communication groove and the housing assembly 100. The separator 310 is further provided with a heat-conducting end face at one end close to the battery cell 200. The first barrier 320 is provided on the heat-conducting end face or the end face of the battery cell 200 close to the separator 310, and the first barrier 320 is configured to prevent the passage of the thermally conductive material.

Compared with an existing battery module with a cooling component on the market, the heat dissipation module 300 in the battery module provided in this embodiment of this application includes only the separator 310, the thermally conductive material, and the first barrier 320, not requiring a complex cooling pipe and other power apparatuses; therefore, the battery module has a relatively simple structure and is easy to be installed. In addition, on the one hand, the first barrier 320 that is disposed can prevent the thermally conductive material from accidentally seeping out of the accommodating space 311 and flowing to the surface of the battery cell 200 to affect normal operation of the battery cell 200; on the other hand, the first barrier 320 can also allow the gas generated by the battery cell 200 to pass through, avoiding excessive swelling of the battery cell 200.

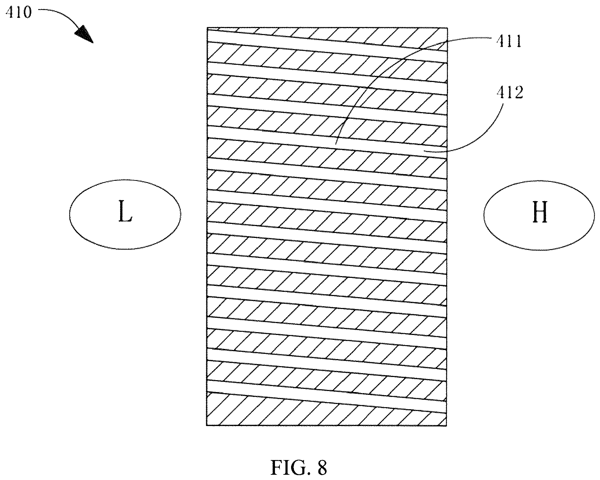

Based on the same inventive concept, this application further provides another battery module. For details, refer to FIG. 7 and FIG. 8. FIG. 7 and FIG. 8 are respectively a three-dimensional cross-sectional view of a battery module 400 and a schematic cross-sectional view of a separator 410. Also referring to FIG. 1 to FIG. 4, a main difference between the battery module and the battery module in the first embodiment lies in a specific structure of the separator:

In the first embodiment, the entire accommodating space 311 of the separator 310 is in a continuously bending S-shape.

However, in the second embodiment, a heat-conducting end face of an accommodating space 411 of the separator 410 is in a rectangular shape adapted to a shape of a battery cell, the bottom of the rectangle is parallel to the bottom of the housing assembly, and the accommodating space 411 and a communication groove 412 are both straight and extend along a same straight line. In addition, the accommodating space 411 and the communication groove 412 are disposed obliquely with respect to the bottom of the housing assembly, and both gradually extend away from the bottom of the housing assembly in a direction outside from a high temperature environment area H to a low temperature environment area L. Generally, after a phase change (liquefaction or vaporization) occurs in the thermally conductive material at the end close to the high-temperature environment area H, the density of the thermally conductive material decreases, and the thermally conductive material diffuses to the side of the low-temperature environment area L, until reaching the second barrier and the housing assembly for heat dissipation. After that, another phase change (solidification or liquefaction) occurs in the thermally conductive material, and the thermally conductive material moves along a path of the accommodating space 411 to the side close to the high temperature environment area under the action of gravity. In this way, the thermally conductive material can circulate in the accommodating space 411 and the communication groove 412 to implement long-term heat dissipation for the battery cell. In this embodiment, one separator 410 is provided with at least two accommodating spaces 411, and the at least two accommodating spaces 411 are arranged in parallel along the direction from the bottom wall of the housing to the top wall, and two communication grooves 412 corresponding to the same accommodating space 411 are respectively arranged on two opposite sides of the separator 410 along the second direction Y, and one second barrier corresponds to each communication groove at one end of each separator 410 along the second direction Y. It can be understood that this application may alternatively have adaptive variations based on this embodiment. For example, one separator 410 corresponds to two second barriers, and the two second barriers are respectively disposed on two sides of the separator 410 along the second direction Y and seal the communication grooves 412. For another example, the second barriers are in one-to-one correspondence with the communication grooves 412, that is, each separator corresponds to a plurality of second barriers, and each second barrier seals one communication groove.

Based on the same inventive concept, this application further provides a heat dissipation module. The heat dissipation module is applied to a battery module. A specific structure of the heat dissipation module is the same as the structure of the heat dissipation module in the battery module in any one of the foregoing embodiments. The heat dissipation module comes in contact with heating components in the battery module to absorb heat generated in the battery module, or absorb heat radiated by the heating components to dissipate heat for the heating components, so as to dissipate the heat out of the separator through the communication groove.

Compared with an existing cooling component on the market, the heat dissipation module provided in this embodiment has a simpler structure and is easy to be installed. It should be understood that the heating component described above may include a battery cell, or may be other components in the battery module.

Based on the same inventive concept, this application further provides an energy storage apparatus. The energy storage apparatus includes the battery module in any one of the foregoing embodiments. With the battery module, the heat dissipation module in the energy storage apparatus has a relatively simple structure and is easy to be installed.

Based on the same inventive concept, this application further provides a vehicle. The vehicle includes the battery module in any one of the foregoing embodiments. With the battery module, the heat dissipation module in the battery module of the vehicle has a relatively simple structure and is easy to be installed.

Finally, it should be noted that the foregoing embodiments are merely used to describe the technical solutions of this application, and are not to be limited under the concept of this application. The technical features in the foregoing embodiments or different embodiments can also be combined. The steps may be implemented in any order, and there are many other variations in different aspects of this application as described above, which are not provided in detail for the sake of brevity. Although this application has been described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A heat dissipation module, applied to a battery module and **characterized by** comprising:
a separator, wherein an accommodating space is provided inside the separator, a communication groove is provided on a side of the separator, and the communication groove communicates with the accommodating space;
a thermally conductive material, filled in the accommodating space, wherein the thermally conductive material is configured to absorb heat generated in the battery module and dissipate the heat out of the separator through the communication groove; and
a first barrier, configured to be disposed between a battery cell of the battery module and the separator, wherein the first barrier is configured to prevent the passage of the thermally conductive material.

2. The heat dissipation module according to claim 1, **characterized in that** the thermally conductive material fills 60% to 90% of a total volume of the accommodating space and the communication groove at a room temperature.

3. The heat dissipation module according to claim 1, **characterized in that** the accommodating space is in a continuously bending shape.

4. The heat dissipation module according to claim 1, **characterized in that** the first barrier is provided with a microporous structure for gas generated in the battery module to pass through.

5. The heat dissipation module according to claim 1, **characterized in that** the separator has a gas-permeable structure.

6. The heat dissipation module according to claim 1, **characterized in that** the separator has an air-impermeable structure, the separator is provided with a heat-conducting end face at one end close to the first barrier, and the heat-conducting end face is provided with an air groove.

7. The heat dissipation module according to claim 6, **characterized in that** at least one end of the air groove extends to the side of the separator.

8. The heat dissipation module according to claim 1, **characterized by** further comprising a second barrier, wherein the second barrier covers and seals an opening of the communication groove, and the second barrier is configured to prevent the thermally conductive material from seeping out of the separator.

9. The heat dissipation module according to claim 7, **characterized in that** at least one end of the air groove extends to the side of the separator provided with the communication groove;
the heat dissipation module further comprises a second barrier, wherein the second barrier covers and seals an opening of the communication groove and an opening at one end of the air groove corresponding to the communication groove; and
the second barrier is configured to prevent the thermally conductive material from seeping out of the separator, and the second barrier is provided with a microporous structure for gas generated by the battery cell to pass through.

10. The heat dissipation module according to claim 8 or 9, **characterized in that** the first barrier is made of polytetrafluoroethylene; and/or
the second barrier is made of polytetrafluoroethylene.

11. The heat dissipation module according to any one of claims 1 to 9, **characterized in that** the thermally conductive material is a phase-change material.

12. A battery module, **characterized by** comprising a housing assembly and a battery cell, wherein the housing assembly is provided with an accommodating cavity, the battery cell is received in the accommodating cavity, the battery module further comprises a heat dissipation module disposed between the battery cells and/or between the battery cell and the housing assembly, and the heat dissipation module comprises:
a separator, connected to the housing assembly, wherein the separator is provided with an accommodating space, the separator is provided with a communication groove on a side corresponding to an inner wall of the housing assembly, and the communication groove communicates with the accommodating space;
a thermally conductive material, filled in the accommodating space, wherein the thermally conductive material is configured to absorb heat generated in the battery cell and dissipate the heat to the outside through the communication groove and the housing assembly; and
a first barrier, disposed between the battery cell and the separator, wherein the first barrier is configured to prevent the passage of the thermally conductive material.

13. The battery module according to claim 12, **characterized in that** a volume of the thermally conductive material is 60% to 90% of a total volume of the accommodating space and the communication groove at a room temperature.

14. The battery module according to claim 12, **characterized in that** the accommodating space is in a continuously bending shape.

15. The battery module according to claim 12, **characterized in that** the first barrier is provided with a microporous structure for gas generated in the battery cell to pass through.

16. The battery module according to claim 15, **characterized in that** the separator has a gas-permeable structure.

17. The battery module according to claim 15, **characterized in that** the separator has an air-impermeable structure, the separator is provided with a heat-conducting end face at one end close to the first barrier, and the heat-conducting end face is provided with an air groove.

18. The battery module according to claim 17, **characterized in that** at least one end of the air groove extends to the side of the separator.

19. The battery module according to claim 12, **characterized in that** the heat dissipation module further comprises a second barrier, wherein the second barrier covers and seals an opening of the communication groove, and the second barrier is configured to prevent the thermally conductive material from seeping out of the separator.

20. The battery module according to claim 18, **characterized in that** at least one end of the air groove extends to the side of the separator provided with the communication groove;
the heat dissipation module further comprises a second barrier, wherein the second barrier covers and seals an opening of the communication groove, and covers and seals an opening at one end of the air groove corresponding to the communication groove; and
the second barrier is configured to prevent the thermally conductive material from seeping out of the separator, and the second barrier is provided with a microporous structure for gas generated by the battery cell to pass through.

21. The battery module according to claim 19 or 20, **characterized in that** the housing assembly comprises a housing and a buffer sheet, the battery cell is received in the housing, the buffer sheet is at least partially embedded between the second barrier and the housing, and the housing and the buffer sheet jointly form the accommodating cavity.

22. The battery module according to claim 12, **characterized in that** the accommodating space and the communication groove extend along the same straight line, and both the accommodating space and the communication groove extend obliquely with respect to a bottom of the housing assembly.
